# EUROPÄISCHE PATENTSCHRIFT

(11) **EP 3 640 224 B1**
(45) Veröffentlichungstag und Bekanntmachung des Hinweises auf die Patenterteilung: **30.11.2022**
(21) Anmeldenummer: 19214658.7
(22) Anmeldetag: 29.10.2015
(51) Int. Cl.: C04B 28/12, C04B 40/06, C04B 28/02, C04B 28/10, C04B 28/18, C04B 111/00, C04B 111/10, C04B 103/10

(54) **AUSBLÜHREDUZIERTE BINDEMITTELZUSAMMENSETZUNG MIT GÜNSTIGER CO2 BILANZ**
BINDER COMPOSITION WITH REDUCED EFFLORESCENCE AND FAVOURABLE CO2 BALANCE
COMPOSITION DE LIANT A EFFLORESCENCE REDUITE A FAIBLE EMISSION DE CO2

(43) Veröffentlichungstag der Anmeldung: 22.04.2020
(62) Teilanmeldung aus: 15192127.7
(73) Patentinhaber: STO SE & Co. KGaA, 79780 Stühlingen (DE)
(72) Erfinder: Holzer, Michael, 78315 Radolfzell (DE); Müller, Monika, 78166 Donaueschingen (DE)
(74) Vertreter: Gottschalk, Matthias

(56) Entgegenhaltungen:
- EP-A1- 1 767 506
- WO-A1-2011/098814
- WO-A1-2014/162097
- AT-B- 227 145
- AT-B- 396 227
- DE-A1- 3 437 680
- DE-A1- 3 742 566
- DE-A1-102014 206 785
- DE-C2- 3 437 680
- FR-A1- 3 011 546
- KEUN-HYEOK YANG ET AL: "Hydration products and strength development of calcium hydroxide-based alkali-activated slag mortars", CONSTRUCTION AND BUILDING MATERIALS, ELSEVIER, NETHERLANDS, vol. 29, 17 October 2011 (2011-10-17), pages 410-419, XP028444502, ISSN: 0950-0618, DOI: 10.1016/J.CONBUILDMAT.2011.10.063 [retrieved on 2011-10-28]

## Beschreibung

Die Erfindung betrifft eine zementfreie Bindemittelzusammensetzung, umfassend latent hydraulisches Bindemittel, nämlich Hüttensandmehl, Kalkhydrat sowie mindestens ein Hydrophobierungsmittel der im Anspruch 1 definierten Art. Die Erfindung betrifft ferner die Verwendung dieser Zusammensetzung zur Verminderung von Ausblühungen in Putzen, Mörteln, Fliesen- und Natursteinklebern.

### Hintergrund der Erfindung

Bindemittelzusammensetzungen zur Herstellung von Putzen, Mörteln und dergleichen basieren üblicherweise auf der Verwendung hydraulischer Bindemittel wie Zement, insbesondere Portlandzement und dergleichen. Beispielsweise beschreibt die deutsche Gebrauchsmusterschrift DE 29 825 081 U1 schnellst erstarrende hydraulische Bindemittelzusammensetzungen enthaltend sulfatträgerfreie Bindemittelkomponenten wie Portlandzementklinkermehl sowie Polycarboxylate als Fließmittel zur Modifizierung der Erstarrungszeit. Die deutsche Offenlegungsschrift DE 3 742 566 A1 beschreibt hydraulische Bindemittel mit einem Anteil an gemahlener Hochofenschlacke sowie Zusätzen von Kalk oder Zement und alkalischen Sulfaten als Anreger. Bereits die deutsche Patentschrift Nr. 290902 beschreibt darüber hinaus die Verwendung von Hochofenschlacken in vermahlener NH:gc

Form in Putzmörteln, wobei Schlackenkörner unterschiedlicher Teilchengrößen in geeigneter Mischung in Verbindung mit Kalkhydrat verwendet werden.

Aus WO 2011/098814 ist ein auf Kalkhydrat basierter Putz bekannt, der Na-Formiat enthalten kann.

Aus DE 10 2014 206785 A1 ist es bekannt, Kalziumlaurat einem Gipstrockenmörtel als Hydrophobierungsmittel zuzusetzen.

Hüttensand als Bestandteil von Zementmischungen ist auch in DE 34 37 680 offenbart.

Aus Keun-Hyeok Yang et al. "Hydration products and strength development of calcium hydroxide-based alkali-activated slag mortars", Construction and Building Materials, Elsevier, Netherlands, Bd. 29, 17. Oktober 2011), Seiten 410-419, XP28444502 sind zementfreie Bindemittel auf Basis von Hüttensand, Kalkhydrat und entweder Na₂SiO₃ oder Na₂CO₃ bekannt. Diese Bestandteile werden trocken gemischt. In einer beispielhaften Zusammensetzung beträgt das Gewichtsverhältnis von Hüttensandmehl zu Kalkhydrat 12,3 : 1. Kalkhydrat wird als Hauptaktivator und Na₂SiO₃ oder Na₂CO₃ werden als Nebenaktivator beschrieben.

Aus ökologischen Gründen besteht ein zunehmender Bedarf für zementfreie Bindemittel bei der Mörtel-, Putz und Fliesenkleberherstellung. Bei der Herstellung üblicher Zemente wird in erheblichen Mengen CO₂ freigesetzt, so dass zementhaltige Bindemittelzusammensetzungen generell eine ungünstige CO₂ Bilanz aufweisen. Es wurde daher für die Herstellung von beispielsweise Putzen nach neuen Bindemittelzusammensetzungen gesucht, welche den Einsatz von Zement vermeiden und die Herstellung von zementfreien Bindemittelzusammensetzungen ermöglichen. Latent hydraulische Bindemittel wie gemahlene, glasige Hochofenschlacken oder Hüttensandmehl weisen im Vergleich zu Zement eine generell günstigere CO₂ Bilanz sowie einen geringeren Primärenergiebedarf auf. Die Verwendung dieser Reststoffe aus der Stahlproduktion zur Herstellung von Putzen und Mörteln ist daher grundsätzlich wünschenswert. Allerdings werden diese im Stand der Technik zur Erzielung der gewünschten Eigenschaften meist zusammen mit Zement und/oder Sulfaten wie Gips verwendet, wobei CO₂-intensive Materialien nur teilweise ersetzt werden. Derartige zementhaltige Bindemittel weisen zudem den Nachteil auf, mit der Zeit mineralische Ausblühungen an der Putzoberfläche zu bilden, welche die optische Qualität der verputzten Oberflächen vermindern, was insbesondere bei farbigen Oberputzen, Fugenmörteln und dergleichen unerwünscht ist.

Aufgabe der vorliegenden Erfindung ist es, eine Bindemittelzusammensetzung zur Verfügung zu stellen, welche die Herstellung von Putzen, Mörteln und Fliesen- bzw. Natursteinklebern mit günstiger CO₂ Bilanz ermöglicht. Eine weitere Aufgabe der Erfindung liegt in der Bereitstellung einer Bindemittelzusammensetzung, welche unerwünschte Ausblühungen an der Oberfläche vermeidet.

### Offenbarung der Erfindung

Zur Lösung dieser Aufgaben wird eine zementfreie Bindemittelzusammensetzung mit den Merkmalen des Anspruchs 1 bereitgestellt. Vorteilhafte Weiterbildungen der Erfindung sind in den jeweiligen Unteransprüchen aufgeführt.

Die vorliegende Erfindung betrifft eine zementfreie Bindemittelzusammensetzung, welche Hüttensandmehl in Kombination mit Kalkhydrat sowie mindestens einem Hydrophobierungsmittel und mindestens einem Beschleuniger, nämlich CSH-Impfkristalle und/ oder Calciumformiat, umfasst.

"Zementfrei" im Sinne der vorliegenden Erfindung bedeutet, dass die erfindungsgemäßen Bindemittel- bzw. Trockenzusammensetzungen frei von Portlandzementklinker und/oder allgemein Zementklinker sind, das heißt vorzugsweise keine Zusätze von Zement nach DIN EN 197-1 (November 2011) wie z.B. Portlandzement, oder dergleichen aufweisen. Zement nach DIN EN 197-1 ist stets gekennzeichnet durch einen Gehalt an Portlandzementklinker. Im Allgemeinen sind solche Zemente ohne Anreger bzw. Zusatzstoffe mit Wasser abbindende anorganische Bindemittel, welche somit zu der Gruppe der hydraulischen Bindemittel gehören. Latent hydraulische Bindemittel fallen im Gegensatz dazu nicht unter den Begriff des Zements.

Die Verwendung von Hüttensandmehl als Zementersatz weist Vorteile hinsichtlich der CO₂-Bilanz der Bindemittelzusammensetzung auf.

Hüttensandmehl wird durch Mahlen von Hüttensand hergestellt und hat latent hydraulische Eigenschaften. Übliche Anforderungen an Hüttensandmehl für die Verwendung in Baustoffen wie Mörtel sind zum Beispiel in der DIN EN 15167-1 (Dezember 2006) festgelegt. In erfindungsgemäßen Bindemittelzusammensetzungen wird vorzugsweise Hüttensandmehl aus glasiger granulierter Hochofenschlacke mit folgenden Eigenschaften verwendet:
Hüttensand entsteht durch schnelles Abkühlen einer Schlackenschmelze, die im Hochofen beim Schmelzen von Eisenerz gebildet wird. Eine typische Hüttensandmehlzusammensetzung enthält nach Masseanteilen mindestens zwei Drittel glasig erstarrte Schlacke und weist latent hydraulische Eigenschaften auf. Repräsentative Hüttensandmehle enthalten nach DIN EN 15167-1 an Masseanteilen typischerweise mindestens zwei Drittel Calciumoxid (CaO), Magnesiumoxid (MgO) und Siliziumdioxid (SiO₂), wobei die chemische Analyse als Oxide berechnet wurde. Der Rest enthält Aluminiumoxid (Al₂O₃) und geringe Anteile anderer Verbindungen. Das Massenverhältnis CaO + MgO/(SiO₂) ist üblicherweise größer als 1,0. Geeignete Hüttensandmehle weisen möglichst geringe Körnungen auf, wie z.B. bis zu 1 mm, vorzugsweise bis zu 0,8 mm, bevorzugt bis zu 0,5 mm und besonders bevorzugt bis zu 0,2 mm, üblicherweise bestimmt durch Siebung. Die erfindungsgemäß geeigneten Hüttensandmehle weisen eine spezifische Oberfläche bzw. von >2750 cm²/g, vorzugsweise von > 3000 cm²/g, besonders bevorzugt von > 4000 cm²/g, bestimmt mittels Blaine-Gerät gemäß DIN EN 196-6 (Mai 2010).

Erfindungsgemäße Bindemittelzusammensetzungen enthalten typischerweise 10 bis 80 Gew.-%, bevorzugt 20 bis 40 Gew.%, vorzugsweise 25 bis 35 Gew.-% und insbesondere bevorzugt etwa 30 Gew.-% latent hydraulisches Bindemittel, vorzugsweise Hüttensandmehl, bezogen auf die gesamte, trockene Bindemittelzusammensetzung.

Sofern nicht anders angegeben beziehen sich in dieser Beschreibung alle Gew.-% Angaben auf das Gesamtgewicht der Trockenzusammensetzung und addieren sich in der Bindemittelzusammensetzung über alle Bestandteile auf 100 %.

Bei der Auswahl des Hüttensandmehles ist neben den latent hydraulischen Eigenschaften gegebenenfalls auch noch eine möglichst helle neutrale Farbe zu berücksichtigen, um den Einsatz in tönbaren bzw. färbbaren Oberputzen zu gewährleisten. Die Farbe sollte vorzugsweise bei Oberputzen möglichst weiß sein, ist jedoch bei den meisten Anwendungen unbeachtlich.

Die erfindungsgemäßen zementfreien Bindemittelzusammensetzungen umfassen ferner Kalkhydrat. Im wesentlichen ist dies chemisch gesehen Ca(OH)₂, Calciumhydroxid, und wird auch als Kalkhydrat oder oft einfach als Kalk bezeichnet. Geeignet sind zum Beispiel allgemein Baukalke und auf Raumbeständigkeit geprüfte Kalkhydrate für Putze und Mörtel nach DIN EN 459-1 (Juli 2015), wie Weißkalk (CL70, CL80, CL90), Dolomitkalk (DL80/ DL85) sowie hydraulischer Kalk (HL2 /HL3,5/HL5), natürliche hydraulische Kalke, oder Romankalk. Vorzugsweise verwendet werden Weißkalke wie ungelöschter Kalk und Kalkhydrat, Dolomitkalke, natürliche hydraulische Kalke, formulierte Kalke und hydraulische Kalke und beliebige Mischungen daraus. Die bevorzugte Zugabe von Calciumhydroxid bzw. Kalkhydrat in erfindungsgemäßer Bindemittelzusammensetzung dient in erster Linie als Anreger bzw. Härter für die latent- hydraulischen Bindemittel, damit diese bei Wasserzusatz abbinden können.

Die erfindungsgemäße Bindemittelzusammensetzung enthält bis zu 20 Gew.-%, vorzugsweise bis zu 10 Gew.-%, typischerweise 0,1 - 20 Gew.-%, bevorzugt 0,1 - 10 %, und besonders bevorzugt 1 - 5 Gew.-% Kalkhydrat, bezogen auf die trockene Gesamtzusammensetzung.

In den erfindungsgemäßen zementfreien Bindemittelzusammensetzungen wird das Gewichtsverhältnis von Hüttensandmehl zu Kalkhydrat bei bis zu 50:1 liegen, und wird üblicherweise im Bereich von 5:1 bis 30:1, vorzugsweise 10:1 bis 20:1, insbesondere bei 15:1 eingestellt.

Zur Einstellung der Verarbeitungs- und Abbindezeit wird der erfindungsgemäßen zementfreien Bindemittelzusammensetzung mindestens ein e Beschleuniger zugesetzt. Durch Zusetzen eines Beschleunigers kann die Geschwindigkeit des Aushärtens der mit Anmachwasser angemachten Bindemittelzusammensetzung gezielt gesteuert werden. Erfindungsgemäße zementfreie Bindemittelzusammensetzungen enthalten daher vorzugsweise mindestens einen Beschleuniger. Als Beschleuniger geeignet sind bCSH-(Calcium-Silikat-Hydrat)-Impfkristalle und/oder Calciumformiat.

Besonders bevorzugt ist die Verwendung von Calciumformiat als Beschleuniger, welches sich für die erfindungsgemäßen Bindemittelzusammensetzungen als besonders geeignet erwiesen hat.

Die Menge an Beschleuniger kann auf die gegebenen oder erwarteten Verarbeitungsbedingungen, wie beispielsweise Temperatur oder Feuchtigkeit, eingestellt werden. Die geeignete Menge an Beschleuniger wird üblicherweise durch Vorversuche bestimmt und entsprechend der gewünschten Aushärtezeit und dem jeweiligen Anwendungszweck eingestellt. Üblicherweise liegt die Menge an Beschleuniger, vorzugsweise Calciumformiat, in erfindungsgemäßen Bindemittelzusammensetzungen bei 0,1 bis 3 Gew.-%, vorzugsweise 0,2 bis 2, besonders bevorzugt 0,3 bis 1 Gew.-%.

Für die Verwendung beispielsweise in Putzrezepturen oder Fliesen- und Natursteinklebern ist es gegebenenfalls vorteilhaft, die erfindungsgemäßen Bindemittelzusammensetzungen hinsichtlich der Wasserabweisung anzupassen. Die üblicherweise in zementhaltigen Bindemittelzusammensetzungen verwendeten Hydrophobierungsmittel wie Oleate und Stearate sind überraschenderweise hinsichtlich ihrer Wirkung in erfindungsgemäßen Bindemittelzusammensetzungen eingeschränkt, da ggf. Unverträglichkeiten mit sonstigen Bestandteilen beobachtet werden. In erfindungsgemäßen Bindemittelzusammensetzungen wird daher als Hydrophobierungsmittel vorzugsweise Laurinsäure, Salze und Ester der Laurinsäure, Alkali-, Erdalkali- und Metallsalze der Laurinsäure eingesetzt. Als besonders bevorzugt wird Calciumlaurat eingesetzt, welches sich als stabilisierend und kompatibler erwiesen hat, gegebenenfalls in Mischungen mit Oleaten und/oder Stearaten.

Laurate wie Calciumlaurat sind als Gleitmittel unter anderem aus der Kunststoffherstellung bekannt. Die besonders in der erfindungsgemäßen Bindemittelkombination gute hydrophobe Wirkung der Laurinsäure, Salze und Ester der Laurinsäure, Alkali-, Erdalkali- und Metallsalze der Laurinsäure ist überraschenderweise ferner verbunden mit einer ausblühreduzierenden Wirkung. Herkömmliche Putze und Mörtel mit Portlandzement und anderen zementhaltigen Bindemitteln haben den Nachteil, dass es im Lauf der Zeit zu Ausblühungen auf den Oberflächen kommen kann. Ausblühungen bei derartigen Bindemittelzusammensetzungen bestehen im Wesentlichen aus weißlichem Calciumcarbonat, welches aus dem bei der (Portland)-Zementhydratation entstehenden Calciumhydroxid (=Portlandit) und dem CO₂ aus der Luft gebildet wird.

Ohne auf eine bestimmte Theorie festgelegt werden zu wollen, wird bei der erfindungsgemäßen Bindemittelzusammensetzung bei der Hydratation kein Calciumhydroxid neu gebildet, sondern das zur Anregung benötigte Calciumhydroxid durch das Hüttensandmehl sogar teilweise "verbraucht" und in kalkärmere CSH-Phasen eingebaut. Deshalb ist das Angebot an Calciumhydroxid, welches mit dem CO₂ aus der Luft zu weißlichem Calciumcarbonat und somit potentiellen Ausblühungen reagieren kann, deutlich reduziert. Die Zugabe von erfindungsgemäßen Hydrophobierungsmitteln führt weiterhin zu einer geringen kapillaren Aufnahme von Wasser, welches bei der chemischen Reaktion von Calciumhydroxid und CO₂ zu Calciumcarbonat als Reaktionspartner (H₂O + CO₂= H₂CO₃) benötigt wird. Durch die geringe Wasseraufnahme wird die fortlaufende Reaktion zu Calciumcarbonat behindert und die Neigung zu Ausblühungen reduziert.

Überraschenderweise wurde festgestellt, dass das erfindungsgemäße Bindemittel-System neben einer günstigeren CO₂ Bilanz auch den Vorteil aufweist, dass Ausblühungen wie sie bei herkömmlichen zementhaltigen Bindemitteln auftreten vermieden werden können. Insbesondere bei farbigen Oberputzen, Fugenmörteln sowie Fliesen- und Natursteinkleber sind derartige Ausblühungen aus ästhetischen Gründen unerwünscht.

Die Erfindung betrifft daher auch die Verwendung einer hierin beschriebenen zementfreien Bindemittelzusammensetzung bzw. die Verwendung von Calciumlaurat in zementfreien Bindemittelzusammensetzungen zur Verminderung von Ausblühungen in Putzen, Mörteln, Fliesen- und Natursteinklebern.

Üblicherweise liegt die Menge an Hydrophobierungsmittel, vorzugsweise Calciumlaurat, in erfindungsgemäßen Bindemittelzusammensetzungen bei bis zu 2 Gew.-%, bevorzugt bei 0,01 bis 2 Gew.-%, vorzugsweise bei 0,05 bis 1 Gew.-%, besonders bevorzugt bei 0,1 bis 0,8 Gew-% und insbesondere bei etwa 0,5 Gew.-%, bezogen auf die trockene Bindemittelzusammensetzung.

Die Bindemittelzusammensetzungen können ferner weitere Additive und/oder Füllstoffe umfassen.

In einer bevorzugten Weiterbildung der vorliegenden Erfindung ist mindestens ein in Baustoffmischungen übliches Additiv enthalten, ausgewählt aus der Gruppe bestehend aus Dispergiermitteln, Fließ(hilfs)mittel, Verzögerer, Biozide wie z.B. Algizide, Fungizide, Netzmittel, Porenbildner, Entschäumer, Entstaubungsmittel, Wasserretentionsmittel, Fasern, Füllstoffe, Dispersionspulver, Flammschutzmittel und Thixotropiermittel.

Die Menge an Additiven in erfindungsgemäßen Bindemittelzusammensetzungen liegt üblicherweise bei bis zu 10 Gew.-%, vorzugsweise bei 0,1 bis 10 Gew.-%, bevorzugt bei 0,2 bis 8 Gew.-%, besonders bevorzugt bei 0,3 bis 5 Gew.-%, als Summe über alle Additive, ausgenommen Beschleuniger und Hydrophobierungsmittel, und bezogen auf die trockene Gesamtzusammensetzung.

Gemäß einer anderen bevorzugten Weiterbildung der vorliegenden Erfindung wird der Bindemittelzusammensetzung zumindest ein Farbpigment zugesetzt. Somit können der Bindemittelzusammensetzung farbgebende Eigenschaften verliehen werden, die diese auf die endgültigen Produkte, wie beispielsweise Mörtel oder Putze, weitergeben kann. Bevorzugt werden anorganische Farbpigmente verwendet, insbesondere auf der Basis von Metalloxiden, z.B. Eisenoxide und/oder Titandioxid. Derartige Farbpigmente werden in einer Menge von bis zu 10 Gew.-%, bevorzugt 0,01 bis 10 Gew.-%, weiter bevorzugt in einer Menge von 0,05 bis 5 Gew.-%, besonders bevorzugt 0,1 bis 4 Gew.-% zugegeben, bezogen auf die trockene Gesamtzusammensetzung.

Als Füllstoff können organische und/oder anorganische Füllstoffe verwendet werden. Organische und/oder anorganische Füllstoffe können als Mehle und/oder Körnungen und/oder Leichtfüllstoffe verwendet werden. Auch Mischungen der genannten Füllstoffe werden im Rahmen dieser Erfindung als Füllstoff bezeichnet bzw. unter diesem Begriff zusammengefasst.

Erfindungsgemäß geeignet sind silikatische und/oder karbonatische Mehle, bevorzugt sind karbonatische Gesteinsmehle. Die Mehle erfüllen vorzugsweise die Kornzusammensetzung für Füller nach DIN EN 12620 (Juli 2008). Demnach liegt die Körnung nach der normgemäßen Bestimmung bei < 0,125 mm für 85 - 100 Gew.% des Mehls.

Als Füllstoffe oder Bestandteil von Füllstoffmischungen in der erfindungsgemäßen Bindemittelzusammensetzung werden Mehle, sofern vorhanden, typischerweise in einer Menge von 0,1 - 70 Gew.-%, weiter bevorzugt von 1 bis 30 Gew.-%, besonders bevorzugt von 5 - 20 Gew.-%, bezogen auf die trockene Gesamtzusammensetzung, verwendet.

Erfindungsgemäß geeignete Körnungen sind bevorzugt anorganische Körnungen, die ausgewählt werden aus karbonatischen und /oder silikatischen Gesteins- bzw. Mineralkörnungen. Die Körnungen können je nach Anwendungszweck eine Größe bis zu ca. 6 mm aufweisen, beispielsweise bei Oberputzen, ansonsten allgemein typischerweise bis zu 2 mm, beispielsweise von 1 bis 1500 µm, meistens von 0,1 bis 1,4 mm, jeweils mittels Siebung bestimmt. Körnungen werden, sofern vorhanden, erfindungsgemäß typischerweise in einer Menge von 0,1 - 70 Gew.-%, bevorzugt von 10 - 65 Gew.-% und besonders bevorzugt von 30 - 60 Gew.-%, bezogen auf die trockene Gesamtzusammensetzung, verwendet.

Erfindungsgemäß geeignete Leichtfüllstoffe haben ein Schüttgewicht < 1 kg/l, ermittelt nach DIN EN 459-2 (Dezember 2010), bevorzugt von 10 g/L bis 800 g/L. Sie können ausgewählt werden aus der Gruppe der anorganischen Leichtfüllstoffe wie z. B. geblähten Perliten, Bims, Blähton, Blähschiefer, Blähglasgranulat, Leichtfüllstoff aus Tobermorit, Hohlglaskugeln und/oder der organischen Leichtfüllstoffe wie z. B. Perlen und/oder Granulate aus EPS (EPS = expandiertes Polystyrol) oder Perlen und/oder Granulate aus Biokunststoffen sowie beliebigen Mischungen von Leichtfüllstoffen. Die Größe beträgt meist bis zu 2 mm, bevorzugt bis 1,5 mm. Die Leichtfüllstoffe werden, sofern vorhanden, erfindungsgemäß in einer Menge typischerweise von 0,1 - 50 Gew.-%, bevorzugt von 0,2 - 25 Gew.-% und besonders bevorzugt von 0,3 - 10 Gew.-%, bezogen auf die trockene Gesamtzusammensetzung, verwendet.

In der erfindungsgemäßen Bindemittelzusammensetzung werden typischerweise 10 bis 90 Gew.-%, weiter bevorzugt 20 bis 80 Gew.-%, vorzugsweise 30 bis 70 Gew.-%, und insbesondere etwa 62 Gew. % Füllstoffe verwendet, bezogen auf die trockene Gesamtzusammensetzung.

Gemäß einem bevorzugten Aspekt der Erfindung ist die erfindungsgemäße Bindemittelzusammensetzung nicht nur zementfrei, sondern auch frei von wasserlöslichen Sulfatphasen, insbesondere frei von der Rezeptur zugegebenen Ca-Sulfatphasen wie Gips und Halbhydrat, z. B. gemahlener Gips bzw. gemahlenes Halbhydrat. Das Vermeiden derartiger Stoffe bzw. Zusätze führt zu einer weiteren Verringerung der Ausblühneigung, und wirkt sich positiv auf die Langzeitstabilität der mit erfindungsgemäßen Bindemittelzusammensetzungen hergestellten Putze aus.

In einer besonders bevorzugten beispielhaften Zusammensetzung besteht die erfindungsgemäße zementfreie Bindemittelzusammensetzung aus:
20 bis 40 Gew.-%, vorzugsweise 25 bis 35 Gew.-% latent hydraulisches Bindemittel, vorzugsweise Hüttensandmehl;
0,1 bis 10 Gew.-%, vorzugsweise 1 bis 5 Gew.-% Kalkhydrat;
0,2 bis 2 Gew.-%, vorzugsweise 0,3 bis 1 Gew.-% Beschleuniger, vorzugsweise Calciumformiat,
0,05 bis 1 Gew.-%, vorzugsweise 0,1 bis 0,8 Gew.-% Hydrophobierungsmittel, insbesondere Calciumlaurat;
0,2 bis 8 Gew.-%, vorzugsweise 0,3 bis 5 Gew.-% Additive;
20 bis 80 Gew.-%, vorzugsweise 30-70 Gew.-% Füllstoffe,
wobei sich alle Gew.-% Angaben auf das Gesamtgewicht der Trockenzusammensetzung beziehen und sich in der Bindemittelzusammensetzung auf 100 % addieren.

Üblicherweise wird die Bindemittelzusammensetzung als Trockenmischung bereitgestellt. Diese Trockenmischung kann dann mit einer Anmachflüssigkeit, bevorzugt mit Wasser, versetzt werden. Dadurch wird eine Mischung erhalten, die als Klebe- und Armierungsputzen, Unter- und Oberputzen, Fliesenkleber, Natursteinkleber, Fugenmörtel, Fugenfüller, Spachtelprodukt, Bodenbeschichtung, Estrich, verwendet werden kann. Auch im Bereich der Betoninstandsetzung können die erfindungsgemäßen zementfreien

Bindemittelzusammensetzungen verwendet werden. Die Verarbeitung der Mischung kann auf herkömmliche Art erfolgen, beispielsweise durch Aufstreichen, Aufschlämmen, Aufspritzen, Aufspachteln, Aufziehen und dergleichen.

### Beispiele

### Beispiel 1

Eine beispielhafte Bindemittelzusammensetzung hat folgende Rezeptur:

| | |
|---|---|
| 30 Gew.-% | Hüttensandmehl |
| 2 Gew.-% | Kalkhydrat |
| 0,3 Gew.-% | Calciumformiat |
| 0,5 Gew.-% | Calciumlaurat |
| 5 Gew.-% | sonstige Additive, insbesondere Wasserretentionsmittel und |

### Dispersionspulver

| | |
|---|---|
| 2 Gew.-% | Leichtfüllstoffe |
| 47 Gew.-% | Gesteinskörnung |
| 13,2 Gew.-% | Gesteinsmehl. |

Diese Zusammensetzung kann verwendet werden zur Herstellung von Klebe- und Armierungsputzen.

### Beispiel 2

Eine beispielhafte Bindemittelzusammensetzung für einen farbigen Oberputz hat folgende Rezeptur:

| | |
|---|---|
| 30 Gew.-% | Hüttensandmehl |
| 2 Gew.-% | Kalkhydrat |
| 0,5 Gew.-% | Calciumformiat |
| 0,5 Gew.-% | Calciumlaurat |
| 2,5 Gew.-% | sonstige Additive |
| 1,5 Gew-% | Farbpigment |
| 49 Gew.-% | Gesteinskörnung |
| 14 Gew.-% | Gesteinsmehl. |

## Patentansprüche

1. Zementfreie Bindemittelzusammensetzung, in Form einer Trockenmischung, die durch Wasserzusatz in die gebrauchsfertige Bindemittelzusammensetzung überführt werden kann, umfassend:
a) mindestens ein latent hydraulisches Bindemittel, nämlich Hüttensandmehl,
b) Kalkhydrat,
c) mindestens ein Hydrophobierungsmittel, sowie
d) mindestens einen Beschleuniger, nämlich CSH(Calcium-Silikat-Hydrat)-Impfkristalle und/oder Calciumformiat.

2. Bindemittelzusammensetzung nach Anspruch 1, wobei der das Gewichtsverhältnis von Hüttensandmehl, zu Kalkhydrat im Bereich von bis zu 50: 1, bevorzugt von 5:1 bis 30:1, vorzugsweise 10:1 bis 20:1, insbesondere bei 15:1 liegt.

3. Bindemittelzusammensetzung nach einem der vorhergehenden Ansprüche, wobei das Hydrophobierungsmittel Calciumlaurat ist.

4. Bindemittelzusammensetzung nach einem der vorhergehenden Ansprüche, ferner umfassend Additive und/oder Füllstoffe.

5. Bindemittelzusammensetzung nach Anspruch 4, wobei die Additive ausgewählt sind aus mindestens einem aus Dispergiermitteln, Fließ(hilfs)mittel, Verzögerer, Biozide wie z.B. Algizide, Fungizide, Netzmittel, Porenbildner, Entschäumer, Entstaubungsmittel, Wasserretentionsmittel, Fasern, Füllstoffe, Dispersionspulver, Flammschutzmittel und Thixotropiermittel.

6. Bindemittelzusammensetzung nach einem der vorhergehenden Ansprüche, wobei die Füllstoffe ausgewählt sind aus mindestens einem aus organischen und/oder anorganischen Füllstoffen, vorzugsweise Mehle und/oder Körnungen und/oder Leichtfüllstoffe.

7. Bindemittelzusammensetzung nach Anspruch 6, wobei die Füllstoffe ausgewählt sind aus karbonatischen und /oder silikatischen Gesteins- bzw. Mineralkörnungen und/oder Gesteins- bzw. Mineralmehlen, gegebenenfalls in Mischung mit Leichtfüllstoffen.

8. Bindemittelzusammensetzung nach Anspruch 6 oder 7, wobei die Leichtfüllstoffe ausgewählt sind aus mineralischen oder organischen Leichtfüllstoffen wie geblähten Perliten, Bims, Blähton, Blähschiefer, Blähglasgranulat, Leichtfüllstoff aus Tobermorit, Hohlglaskugeln und/oder der organischen Leichtfüllstoffe wie z. B. Perlen und/oder Granulate aus EPS (EPS = expandiertes Polystyrol) oder Perlen und/oder Granulate aus Biokunststoffen, sowie Mischungen davon.

9. Bindemittelzusammensetzung nach einem der vorhergehenden Ansprüche, wobei die Zusammensetzung frei von wasserlöslichen Sulfatphasen, insbesondere Gips und Halbhydrat, ist.

10. Verwendung einer zementfreien Bindemittelzusammensetzung nach einem der vorhergehenden Ansprüche zur Verminderung von Ausblühungen in Putzen, Mörteln, Fliesen- und Natursteinklebern.

## Claims

1. A cement-free binder composition in the form of a dry mixture which can be converted into the ready-to-use binder composition by the addition of water, comprising:
a) at least one latent hydraulic binder, namely granulated blast furnace slag,
b) hydrated lime,
c) at least one waterproofing agent, as well as
d) at least one accelerator, namely C-S-H (calcium silicate hydrate) seed crystals and/or calcium formate.

2. The binder composition as claimed in claim 1, wherein the ratio by weight of granulated blast furnace slag to hydrated lime is in the range from up to 50:1, preferably from 5:1 to 30:1, preferably 10:1 to 20:1, in particular 15:1.

3. The binder composition as claimed in one of the preceding claims, wherein the waterproofing agent is calcium laurate.

4. The binder composition as claimed in one of the preceding claims, further comprising additives and/or fillers.

5. The binder composition as claimed in claim 4, wherein the additives are selected from at least one out of dispersing agents, flow additives, retarders, biocides such as algicides, fungicides, for example, wetting agents, pore-forming agents, defoaming agents, dust control agents, water retaining agents, fibers, fillers, dispersing powders, flame retardants and thixotropic agents.

6. The binder composition as claimed in one of the preceding claims, wherein the fillers are selected from at least one out of organic and/or inorganic filler, preferably powders and/or granulates and/or lightweight fillers.

7. The binder composition as claimed in claim 6, wherein the fillers are selected from carbonate and/or silicate rock aggregates or mineral aggregates and/or rock flour or mineral powders, optionally in a mixture with lightweight fillers.

8. The binder composition as claimed in claim 6 or claim 7, wherein the lightweight fillers are selected from lightweight mineral or organic fillers such as expanded perlites, pumice, expanded clay, expanded shale, expanded glass granulate, lightweight fillers produced from tobermorite, hollow glass spheres and/or lightweight organic fillers such as beads and/or granulates produced from EPS (EPS = expanded polystyrene) or beads and/or granulates produced from bioplastics, as well as mixtures thereof.

9. The binder composition as claimed in one of the preceding claims, wherein the composition is free from water-soluble sulphate phases, in particular gypsum and hemihydrate.

10. Use of a cement-free binder composition as claimed in one of the preceding claims, for the reduction of efflorescence in renders, mortars, tile adhesives and natural stone adhesives.

## Revendications

1. Composition d'agent liant exempte de ciment, sous la forme d'un mélange sec, susceptible d'être transformé par ajout d'eau en la composition d'agent liant prête à l'emploi, comprenant :
a) au moins un agent liant hydraulique latent, à savoir un laitier granulé de haut-fourneau,
b) un hydrate de chaux,
c) au moins un agent conférant le caractère hydrophobe, ainsi
d) qu'au moins un accélérateur, à savoir des germes cristallins de CSH (silicate de calcium hydraté) et/ou un formiate de calcium.

2. Composition d'agent liant selon la revendication 1, le rapport pondéral du laitier granulé de haut-fourneau à l'hydrate de chaux se situant dans l'ordre de jusqu'à 50 : 1, de préférence de 5 : 1 à 30 : 1, de manière préférentielle, de 10 : 1 à 20 : 1, notamment à approximativement 15 : 1.

3. Composition d'agent liant selon l'une quelconque des revendications précédentes, l'agent conférant le caractère hydrophobe étant le laurate de calcium.

4. Composition d'agent liant selon l'une quelconque des revendications précédentes, comprenant par ailleurs des additifs et/ou des agents de charge.

5. Composition d'agent liant selon la revendication 4, les additifs étant sélectionnés dans au moins l'un parmi les agents de dispersion, les agents (auxiliaires) de fluidification, les agents retardateurs, les biocides tels que par exemple les algicides, les fongicides, les agents mouillants, les agents porogènes, les agents antimousse, les agents dépoussiérants, les agents de rétention d'eau, les fibres, les agents de charge, les poudres de dispersion, les retardateurs de flamme et les agents thixotropiques.

6. Composition d'agent liant selon l'une quelconque des revendications précédentes, les agents de charge étant sélectionnés dans au moins l'un parmi les agents de charge organiques et/ou inorganiques, de préférences les farines et/ou les grains et/ou les agents de charge légers.

7. Composition d'agent liant selon la revendication 6, les agents de charge étant sélectionnés parmi les granulats de roche ou de minéraux carbonatés et /ou silicatés et/ou les farines de roches ou de minéraux, en mélange le cas échéant avec des agents de charge légers.

8. Composition d'agent liant selon la revendication 6 ou 7, les agents de charge légers étant sélectionnés parmi les agents de charges légers minéraux ou organiques, tels que les perlites soufflées, la pierre ponce, l'agile expansée, l'ardoise expansée, un granulé de verre expansé, un agent de charge léger de tobermorite, des billes de verre creuses et/ou les agents de charge légers organiques, tels que par exemple les perles et/ou les granulés d'EPS (EPS = polystyrène expansé) ou les perles et/ou les granulés de matières bioplastiques, ainsi que leurs mélanges.

9. Composition d'agent liant selon l'une quelconque des revendications précédentes, la composition étant exempte de phases sulfatées hydrosolubles, notamment de plâtre et d'hémihydrate.

10. Utilisation d'une composition d'agent liant exempte de ciment selon l'une quelconque des revendications précédentes pour réduire les efflorescences dans les enduits, les mortiers, les colles à carrelage et les colles pour pierres naturelles.
